(19) Europäisches Patentamt
European Patent Office
Office européen des brevets

(11) Publication number: **0 154 714**
**A2**

(12) **EUROPEAN PATENT APPLICATION**

(21) Application number: 84115915.5

(22) Date of filing: 20.12.84

(51) Int. Cl.⁴: C 08 G 73/10

(30) Priority: 30.12.83 US 567335

(43) Date of publication of application: 18.09.85
Bulletin 85/38

(84) Designated Contracting States: DE FR GB IT NL

(71) Applicant: GENERAL ELECTRIC COMPANY, 1 River Road, Schenectady New York 12305 (US)

(72) Inventor: Holub, Fred Frank, 2263 Preisman Drive, Schenectady New York 12309 (US)
Inventor: Floryan, Daniel Edwin, Route 49 Colonial Acres, Pittsfield Massachusetts 01201 (US)

(74) Representative: Schüler, Horst, Dr. et al, Kaiserstrasse 41, D-6000 Frankfurt/Main 1 (DE)

(54) **Novel polyetherimide copolymers.**

(57) Polyetherimide copolymers are provided by effecting reaction between an aromatic bis(ether anhydride) and an organic aromatic diamine compound and an organic aliphatic diamine compound. The polyetherimide copolymers exhibit excellent glass transition temperatures and flexibility.

EP 0 154 714 A2

10417-8CU-03295

# NOVEL POLYETHERIMIDE COPOLYMERS

## BACKGROUND OF THE INVENTION

The present invention relates to a new class of polyetherimide copolymers. More specifically, the polyetherimide copolymers contain two distinct types of polymeric units. These copolymers are characterized by excellent thermal and physical properties.

It is known that polyetherimides can be produced by the reaction of an aromatic bis(ether anhydride) and an organic aromatic diamine. It is also known that polyetherimides can be produced by the reaction of an aromatic bis(ether anhydride) and an organic aliphatic diamine. Each of these two types of polymers have certain advantages. Polyetherimides prepared from aromatic diamines have excellent thermal stability and high glass transition temperatures. Polyetherimides prepared from aliphatic diamines are characterized by particularly good flexural properties.

There is a need for a polymer which has the thermal properties of polyetherimides prepared from aromatic diamines and the physical properties of polyetherimides prepared from aliphatic diamines.

## SUMMARY OF THE INVENTION

In accordance with the present invention, novel polyetherimide copolymers contain repeating units of the formulas:

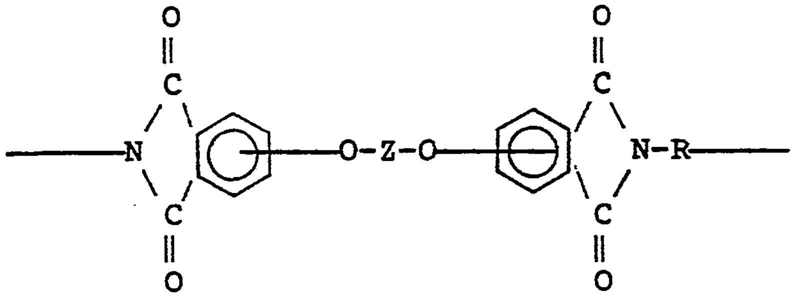
I.

and

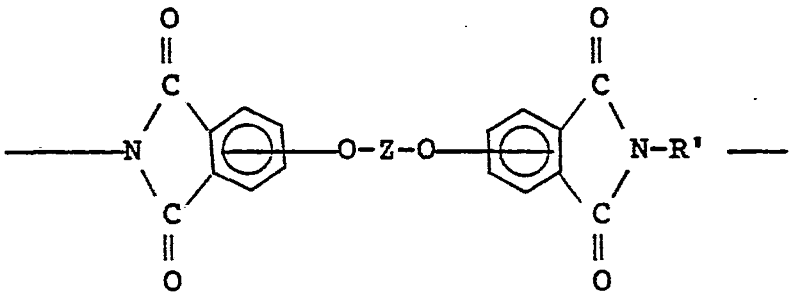
II.

where Z is a member of the class consisting of (1):

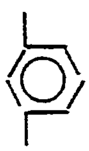 , 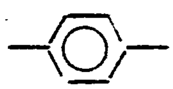 , 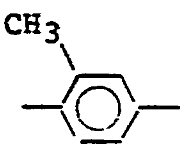 ,

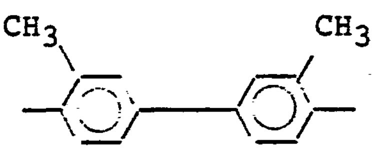 , 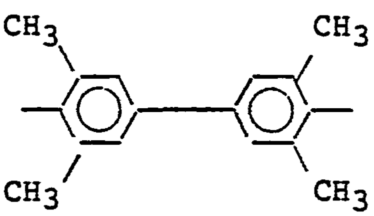

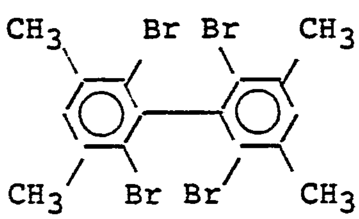 and 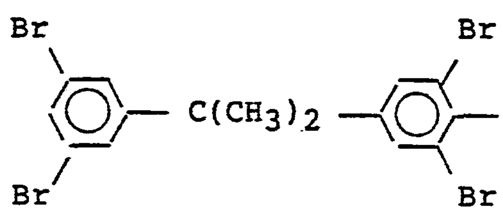

and (2) divalent organic radicals of the general formula:

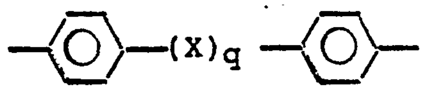

where X is a member selected from the class consisting of divalent radicals of the formulas,

$$-C_yH_{2y}-,\ -\overset{O}{\overset{\|}{C}}-,\ -\underset{\underset{O}{\|}}{\overset{\overset{O}{\|}}{S}}-,\ -O-\ \text{and}\ -S-$$

where q is 0 or 1, y is a whole number from 1 to 5, the divalent bonds of the -O-Z-O- radical being situated on the phthalic anhydride end groups, in the 3,3'-, 3,4'-, 4,3'- or the 4,4'-positions, and R is a divalent organic radical selected from the class consisting of (a) aromatic hydrocarbon radicals having from 6 to about 20 carbon atoms and halogenated derivatives thereof and (b) divalent radicals included by the formula:

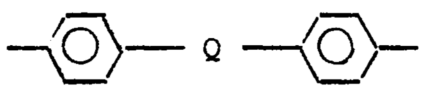

where Q is a member selected from the class consisting of:

$$-O-,\ -C-,\ -\underset{\underset{O}{\|}}{\overset{\overset{O}{\|}}{S}}-,\ -S-,\ \text{and}\ -C_xH_{2x}-,$$

where x is a whole number from 1 to about 5 inclusive, and R' is a divalent organic radical selected from the class consisting of (a) alkylene radicals having from 2 to about 20 carbon atoms, and (b) $C_{(2-8)}$ alkylene terminated polydiorganosiloxane.

The polyetherimide copolymers of the present invention exhibit a broad spectrum of glass transition temperatures which will allow one to specifically tailor a resin to its end use.

## DETAILED DESCRIPTION

The polyetherimides containing the repeating units of Formulas I and II can be obtained by the reaction of any aromatic bis(ether anhydride) of the formula:

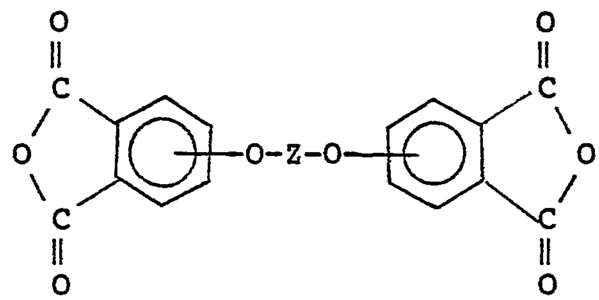 III.

where Z is as defined hereinbefore with an aromatic diamine of the formula:

$$H_2N-R-NH_2 \qquad IV.$$

and an aliphatic diamine of the formula:

$$H_2N-R'-NH_2 \qquad V.$$

where R and R' are as defined hereinbefore. The unit of Formula I is the reaction product of an aromatic bis-(ether anhydride) and the organic aromatic diamine of Formula IV. The unit of Formula II is the reaction product of an aromatic bis(ether anhydride) and the organic aliphatic diamine of Formula V. In general, the reaction can be advantageously carried out employing well-known solvents, e.g., o-dichlorobenzene, m-cresol/-toluene, etc., in which to effect interaction between the dianhydrides and the diamines, at temperatures of from

about 100°C to about 250°C. Alternatively, the polyetherimides can be prepared by melt polymerization of any dianhydride of Formula III with any aromatic diamine of Formula IV and any aliphatic diamine of Formula V while heating the mixture of the ingredients at elevated temperatures with concurrent intermixing. Generally, melt polymerization temperatures between about 200°C to 400°C and preferably 230°C to 300°C can be employed. Any order of addition of chain stoppers ordinarily employed in melt polymerizations can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides, however, in certain instances, a slight molar excess (about 1 to 5 mole percent) of the diamine compounds can be employed resulting in the production of polyetherimides having terminal amine groups.Included among the many methods of making the polyetherimides of Formula I or Formula II are those disclosed in U.S. Patents to Heath et al. 3,847,867, Williams 3,847,869, Takekoshi et al. 3,850,885, White 3,852,242 and 3,855,178, etc. These disclosures are incorporated herein in their entirety by reference for the purpose of teaching, by way of illustration, general and specific methods for preparing polyetherimides suited to the practice of this invention.

The aromatic bis(ether anhydride)s of Formula III include, for example,

2,2-bis[4-(2,3-dicarboxyphenoxy)phenyl]-propane dianhydride;

4,4'-bis(2,3-dicarboxyphenoxy)diphenyl ether dianhydride;

1,3-bis(2,3-dicarboxyphenoxy)benzene dianhydride;
4,4'-bis(2,3-dicarboxyphenoxy)diphenyl sulfide dianhydride;
1,4-bis(2,3-dicarboxyphenoxy)benzene dianhydride;
4,4'-bis(2,3-dicarboxyphenoxy)benzophenone dianhydride;
4,4'-bis(2,3-dicarboxyphenoxy)diphenyl sulfone dianhydride;
2,2-bis[4-(3,4-dicarboxyphenoxy)phenyl]propane dianhydride;
4,4'-bis(3,4-dicarboxyphenoxy)diphenyl ether dianhydride;
4,4'-bis(3,4-dicarboxyphenoxy)diphenyl sulfide dianhydride;
1,3-bis(3,4-dicarboxyphenoxy)benzene dianhydride;
1,4-bis(3,4-dicarboxyphenoxy)benzene dianhydride;
4,4'-bis(3,4-dicarboxyphenoxy)benzophenone dianhydride;
4-(2,3-dicarboxyphenoxy)-4'-(3,4-dicarboxyphenoxy)-diphenyl-2,2-propane dianhydride; etc. and mixtures of such dianhydrides.

In addition, aromatic bis(ether anhydride)s also included by Formula III are shown by Koton, M.M.; Florinski, F.S.; Bessonov, M.I.; Rudakov, A.P. (Institute of Heteroorganic Compounds, Academy of Sciences, U.S.S.R.), U.S.S.R. 257,010, Nov. 11, 1969, Appl. May 3, 1967. In addition, dianhydrides are shown by M.M. Koton, F.S. Florinski, Zh. Org. Khin., 4(5), 774 (1968).

The aromatic diamines of Formula IV include, for example,
m-phenylenediamine,
p-phenylenediamine,
4,4'-diaminodiphenylpropane,
4,4'-diaminodiphenylmethane,
benzidine,
4,4'-diaminodiphenyl sulfide,

4,4'-diaminodiphenyl sulfone,
4,4'-diaminodiphenyl ether,
1,5-diaminonaphthalene,
3,3'-dimethylbenzidine,
3,3'-dimethoxybenzidine,
2,4-bis(β-amino-t-butyl)toluene,
bis(p-β-amino-t-butylphenyl)ether,
bis(p-β-methyl-o-aminopentyl)benzene,
1,3-diamino-4-isopropylbenzene,
m-xylylenediamine,
p-xylylenediamine,
2,4-diaminotoluene,
2,6-diaminotoluene,
and mixtures of such aromatic diamines.

The aliphatic diamines of Formula V include, for example,
3-methylheptamethylenediamine,
4,4-dimethylheptamethylenediamine,
2,11-dodecanediamine,
2,2-dimethylpropylenediamine,
octamethylenediamine,
3-methoxyhexamethylenediamine,
2,5-dimethylhexamethylenediamine,
2,5-dimethylheptamethylenediamine,
3-methylheptamethylenediamine,
5-methylnonamethylenediamine,
1,12-octadecanediamine,
bis(3-aminopropyl)sulfide,
N-methyl-bis(3-aminopropyl)amine,
hexamethylenediamine,
heptamethylenediamine,
nonamethylenediamine,
decamethylenediamine,
bis(3-aminopropyl)tetramethyldisiloxane,

bis(4-aminobutyl)tetramethyldisiloxane, etc., and mixtures of such aliphatic diamines.

In producing the polyetherimide of the present invention both an aromatic diamine and an aliphatic diamine are utilized. The relative proportions of the repeating units of Formulas I and II can vary, depending on the end use of the polyetherimide to be produced. The repeating units of Formula I can be from about 5 to about 95 mole percent of the copolymer; with the balance being the repeating units of Formula II, i.e., from about 95 to about 5 mole percent. Preferred copolymers are those in which the repeating units of Formula I are from about 90 to about 10 mole percent of the copolymer. By varying the amount of particular aromatic diamine or particular aliphatic diamine, one will vary the mole percent of the corresponding polymeric unit to the overall copolymer. In particularly preferred copolymers the repeating unit of Formula I is from about 20 to about 80 mole percent of the total copolymer formed, with the balance being made up of the repeating unit of Formula II.

The present invention provides polymers having desirable glass transition temperatures while maintaining desirable flexibility and tensile properties. The glass transition temperatures are suitable for many applications, particularly injection molding applications.

The polyetherimide copolymer can contain a wide variety of proportions of repeating units of Formula I and II. By controlling the proportions of the polymeric units each having predetermined properties, a polyetherimide can be formed having superiority over a polyetherimide containing only one of the repeating units. In general, the higher proportion of the repeating units of Formula I will result in a polyetherimide having high glass transition temperatures and low flexibility. On the other hand, a polyetherimide having a higher proportion of the repeating units of Formula II will have lower glass transition temperatures and high flexibility.

EXAMPLE I

Several polyetherimide copolymers were produced by conventional solution polymerization techniques using N-methylpyrrolidone (NMP) as a solvent. The aromatic bis(ether anhydride) was 2,2,-bis[4-(2,3-dicarboxyphenoxy)phenyl]-propane dianhydride (BPADA). The aromatic diamine was m-phenylene diamine (MPDA) and the aliphatic diamine was hexamethylene diamine (HMDA). The mole ratio of total diamine to dianhydride was 1 to 1. The ratio of the aromatic to aliphatic diamine was varied as set forth in the table below. Glass transition temperatures were determined by differential scanning calorimetry (DSC).

| MPDA | HMDA | Tg°F |
|---|---|---|
| 100% | 0% | 422 |
| 87.5% | 12.5% | 405 |
| 75.0% | 25.0% | 376 |
| 50.0% | 50.0% | 325 |
| 25.0% | 75% | 288 |
| 0% | 100% | 257 |

EXAMPLE II

The experiment of Example I was repeated in all essential details to produce another series of polyetherimide copolymers. The aromatic bis(ether anhydride) was 2,2,-bis[4-2,3-dicarboxyphenoxy)phenyl]-propane dianhydride (BPADA). The aromatic amine was m-xylylene diamine (MXDA) and the aliphatic amine was hexamethylene diamine (HMDA). The mole ratio of diamine to dianhydride was 1 to 1. The ratio of the aromatic to aliphatic diamine was varied, as set forth in the table below. Again, glass transition temperatures were determined by DSC.

| MXDA | HMDA | Tg°F |
|---|---|---|
| 100% | 0 | 340 |
| 75% | 25 | 320 |
| 50% | 50 | 297 |
| 25% | 75 | 262 |
| 0% | 100 | 257 |

As illustrated by the above data, polyetherimide copolymers having improved properties are obtained where the polyetherimide polymer chain contains both structural units of Formula I and II.

The compositions of the present invention have application in a wide variety of physical shapes and form, including the use as films, molding compounds, coatings, etc. When used as films or when made into molded products, these polymers, including laminated products prepared therefrom, not only possess good physical properties at room temperature but they retain their strength and excellent response to workloading at elevated temperatures for long periods of time. Films formed from the polymeric compositions of this invention may be used in application where films have been used previously. Thus, the compositions of the present invention can be used in automobile and aviation applications for decorative and protective purposes, and as high temperature electrical insulation for motor slot liners, in transformers, as dielectric capacitors, as coil and cable wrappings (form wound coil insulation for motors), for containers and container linings, in laminating structures where films of the present composition or where solutions of the claimed compositions of matter are applied to various heat-resistant or other type of materials such as asbestos, mica, glass fiber and the like and superposing the sheets one upon the other and thereafter subjecting them to elevated temperatures and

pressures to effect flow and cure of the resinous binder to yield cohesive laminated structures. Films made from these compositions of matter can also serve in printed circuit applications.

Alternatively, solutions of the compositions herein described can be coated on electrical conductors such as copper, aluminum, etc., and thereafter the coated conductor can be heated at elevated temperatures to remove the solvent and to effect curing of the resinous composition thereon. If desired, an additional overcoat may be applied to such insulated conductors including the use of polymeric coatings, such as polyamides, polyesters, silicones, polyvinylformal resins, epoxy resins, polyimides, polytetrafluoro-ethylene, etc. The use of the curable compositions of the present invention as overcoats on other types of insulation is not precluded.

Applications which recommend these resins include their use as binders for asbestos fibers, carbon fibers, and other fibrous materials in making brake linings. In addition, molding compositions and molded articles may be formed from the polymeric compositions in this invention by incorporating such fillers as asbestos, glass fibers, talc, quartz, powder, wood flour, finely divided carbon, silica, into such compositions prior to molding. Shaped articles are formed under heat, or under heat and pressure in accordance with practices well-known in the art. In addition, various heat-resistant pigments and dyes may be incorporated as well as various types of inhibitors depending on the application intended.

While the present invention has been described with reference to particular embodiments thereof, it will be understood that numerous modifications may be made by those skilled in the art without actually departing from the spirit and scope of the invention as defined in the appended claims.

CLAIMS

1. A polyetherimide copolymer comprising a polyetherimide containing repeating units of the formulas:

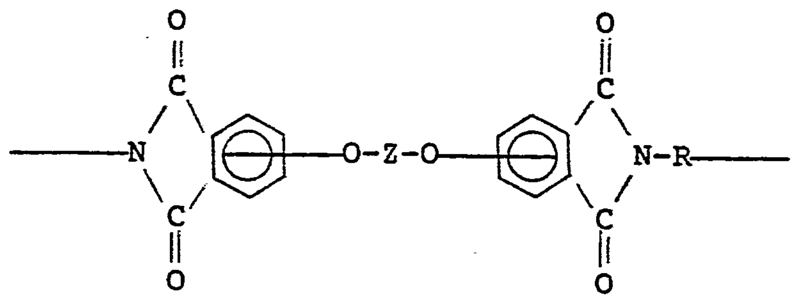

I.

and

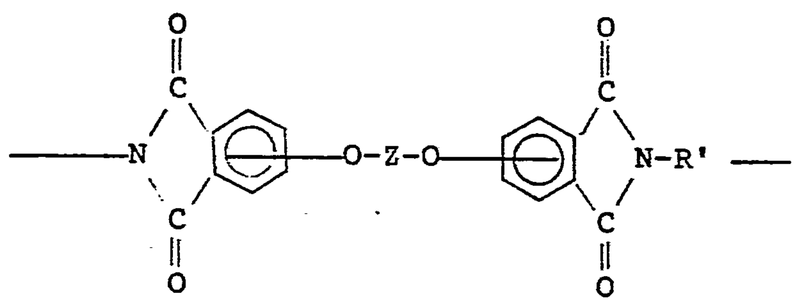

II.

where Z is a member of the class consisting of (1):

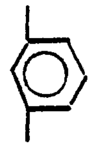 , 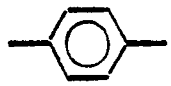 , 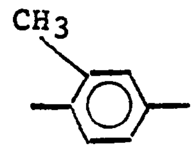 ,

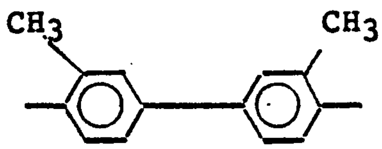 , 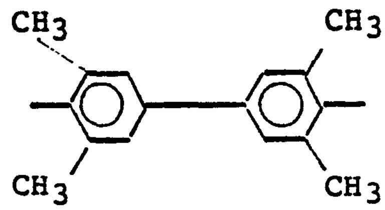

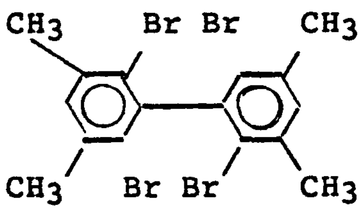 and 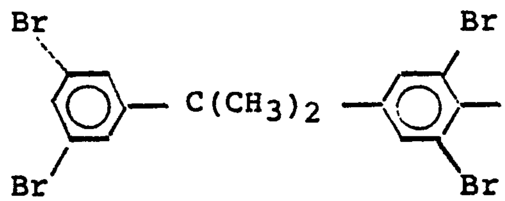

and (2) divalent organic radicals of the general formula:

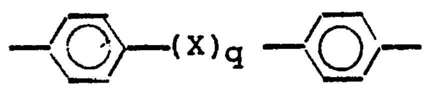

where X is a member selected from the class consisting of divalent radicals of the formulas,

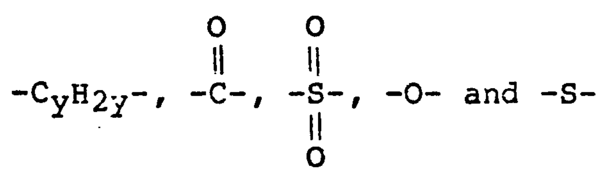

where q is 0 or 1, y is a whole number from 1 to 5, the divalent bonds of the -O-Z-O- radical being situated on the phthalic anhydride end groups, in the 3,3'-3,4'-, 4,3'- or the 4,4'-positions, and R is a divalent organic radical selected from the class consisting of (a) aromatic hydrocarbon radicals having from 6 to about 20 carbon atoms and halogenated derivatives thereof and (b) divalent radicals included by the formula:

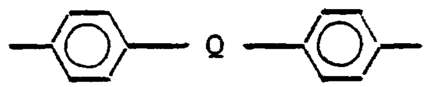

where Q is a member selected from the class consisting of:

-O-, -C-, 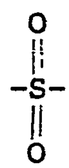, -S-, and $-C_xH_{2x}-$,

where x is a whole number from 1 to 5 inclusive, and R' is a divalent organic radical selected from the class consisting of (a) alkylene radicals having from 2 to about 20 carbon atoms, and (b) $C_{(2-8)}$ alkylene terminated polydiorganosiloxane.

2. The polyetherimide copolymer of claim 1, wherein the repeating unit of Formula I is from about 5 to about 95 mole percent of the copolymer.

3. The polyetherimide copolymer of claim 1, wherein the repeating unit of Formula I is from about 10 to about 90 mole percent of the copolymer.

4. The polyetherimide copolymer of claim 1, wherein the repeating unit of Formula I is from about 20 to about 80 mole percent of the copolymer.

5. The polyetherimide copolymer of claim 1, wherein R' is an alkylene radical of from 2 to about 20 carbon atoms.

6. The polyetherimide copolymer of claim 5, wherein R is m-phenylene or m-xylylene.

7. The polyetherimide copolymer of claim 6, wherein Z is a radical of the formula: